# EUROPEAN PATENT APPLICATION

(11) **EP 4 661 526 A1**
(43) Date of publication of application: **10.12.2025**
(21) Application number: 23918935.0
(22) Date of filing: 30.01.2023
(51) Int. Cl.: H04W 64/00

(54) **GNSS MEASUREMENT METHOD AND APPARATUS, AND DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/073769
(87) International publication number: WO 2024/159344

(57) **Abstract**

The present application relates to the field of mobile communications. Disclosed are a GNSS measurement method and apparatus, and a device and a storage medium. The method comprises: receiving configuration information, wherein the configuration information is used for configuring a first measurement gap, and the first measurement gap is used for performing GNSS measurement. By means of configuring for a terminal a first measurement gap used for performing GNSS measurement, the terminal can perform the GNSS measurement in the first measurement gap. The first measurement gap can be set according to actual situations, such that the problem of it being not possible for a terminal to perform GNSS measurement when a GNSS measurement result of the terminal indicates a failure can be avoided.

## Description

### TECHNICAL FIELD

The disclosure relates to the field of mobile communication technologies, in particular to a method and an apparatus for global navigation satellite system (GNSS) measurement, a device, and a storage medium.

### BACKGROUND

A non-terrestrial network (NTN) is an important technology introduced in the 5th generation mobile communication technology (5G). The NTN provides radio resources via satellites (or unmanned aerial vehicles) instead of terrestrial base stations, enabling a terminal to perform mobile communication.

The terminal may determine a position of the terminal via a GNSS measurement result obtained by performing the GNSS measurement. Some terminals communicating via the NTN cannot support simultaneous GNSS measurement (reception) and transmission/reception of long term evolution (LTE) messages. An implementation process for the terminal to perform the GNSS measurement requires further discussion and research.

### SUMMARY

Embodiments of the disclosure provide a method and an apparatus for GNSS measurement, a device, and a storage medium. The technical solution is as follows.

According to an aspect of the disclosure, a method for GNSS measurement is provided. The method is performed by a terminal and includes: receiving configuration information, in which the configuration information is used to configure a first measurement gap, the first measurement gap is used for the GNSS measurement.

According to another aspect of the disclosure, a method for GNSS measurement is provided. The method is performed by a network device, and includes: sending configuration information to a terminal, in which the configuration information is used to configure a first measurement gap, the first measurement gap is used for the GNSS measurement.

According to another aspect of the disclosure, an apparatus for GNSS measurement is provided. The apparatus includes a receiving module, configured to receive configuration information, in which the configuration information is used to configure a first measurement gap, the first measurement gap is used for the GNSS measurement.

According to another aspect of the disclosure, an apparatus for GNSS measurement is provided. The apparatus includes a sending module, configured to send configuration information to a terminal, in which the configuration information is used to configure a first measurement gap, the first measurement gap is used for the GNSS measurement.

According to another aspect of the disclosure, a terminal is provided. The terminal includes a processor; a transceiver connected to the processor; and a memory storing executable instructions for the processor; in which the processor is configured to load and execute the executable instructions to implement the method for GNSS measurement according to the aspects described above.

According to another aspect of the disclosure, a network device is provided. The network device includes a processor; a transceiver connected to the processor; and a memory storing executable instructions for the processor; in which the processor is configured to load and execute the executable instructions to implement the method for GNSS measurement according to the aspects described above.

According to another aspect of the disclosure, a computer-readable storage medium is provided. The computer-readable storage medium stores executable instructions, which are loaded and executed by a processor to implement the method for GNSS measurement according to the aspects described above.

According to another aspect of the disclosure, a chip is provided. The chip includes a programmable logic circuit and/or program instructions, in which, when the chip runs on a computer device, the method for GNSS measurement according to the aspects described above are implemented.

According to another aspect of the disclosure, a computer program product or a computer program is provided. The computer program product or the computer program includes computer instructions stored in a computer-readable storage medium. A processor reads and executes the computer instructions from the computer-readable storage medium, causing a computer to perform the method for GNSS measurement according to the aspects described above.

The technical solution provided in the disclosure at least includes the following beneficial effects:

By configuring the first measurement gap for the GNSS measurement for the terminal, the terminal is capable of performing the GNSS measurement in the first measurement gap. The first measurement gap may be set based on actual conditions, which may avoid a problem that the terminal cannot perform the GNSS measurement in a case that a GNSS measurement result of the terminal is outdated.

### BRIEF DESCRIPTION OF THE DRAWINGS

In order to more clearly illustrate the technical solutions of the embodiments of the disclosure, the accompanying drawings required to be used in the description of the embodiments of the disclosure may be briefly introduced below. Obviously, for those skilled in the art, the accompanying drawings in the following description are simply some embodiments of the present disclosure, and other accompanying drawings may be obtained based on these accompanying drawings without creative works.
FIG. 1 is a schematic diagram illustrating a communication system provided in an embodiment of the disclosure.
FIG. 2 is a schematic diagram illustrating a non-terrestrial network system provided in an embodiment of the disclosure.
FIG. 3 is a schematic diagram illustrating a non-terrestrial network system provided in an embodiment of the disclosure.
FIG. 4 is a flow chart illustrating a method for GNSS measurement provided in an embodiment of the disclosure.
FIG. 5 is a flow chart illustrating a method for GNSS measurement provided in an embodiment of the disclosure.
FIG. 6 is a flow chart illustrating a method for GNSS measurement provided in an embodiment of the disclosure.
FIG. 7 is a flow chart illustrating a method for GNSS measurement provided in an embodiment of the disclosure.
FIG. 8 is a flow chart illustrating a method for GNSS measurement provided in an embodiment of the disclosure.
FIG. 9 is a flow chart illustrating a method for GNSS measurement provided in an embodiment of the disclosure.
FIG. 10 is a flow chart illustrating a method for GNSS measurement provided in an embodiment of the disclosure.
FIG. 11 is a flow chart illustrating a method for GNSS measurement provided in an embodiment of the disclosure.
FIG. 12 is a flow chart illustrating a method for GNSS measurement provided in an embodiment of the disclosure.
FIG. 13 is a flow chart illustrating a method for GNSS measurement provided in an embodiment of the disclosure.
FIG. 14 is a flow chart illustrating a method for GNSS measurement provided in an embodiment of the disclosure.
FIG. 15 is a flow chart illustrating a method for GNSS measurement provided in an embodiment of the disclosure.
FIG. 16 is a structural block diagram illustrating an apparatus for GNSS measurement provided in an embodiment of the disclosure.
FIG. 17 is a structural block diagram illustrating an apparatus for GNSS measurement provided in an embodiment of the disclosure.
FIG. 18 is a schematic structural diagram illustrating a communication device provided in an embodiment of the disclosure.

### DETAILED DESCRIPTION

In order to make purposes, technical solutions and advantages of the disclosure clearer, embodiments of the disclosure will be described in further detail below in combination with the accompanying drawings.

Illustrative embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of devices and methods consistent with some aspects of the embodiments of the present disclosure as recited in the appended claims.

The terms used in the disclosure are only for the purpose of describing specific embodiments, and are not intended to limit the embodiments of the disclosure. The singular forms of "a", "said" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that terms such as "first", "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

The following is an introduction to non-terrestrial network (NTN) technology.

Currently, relevant standards organizations are researching the NTN technology, which provides communication services to terrestrial users via satellites (or unmanned aerial vehicles) instead of terrestrial base stations. Compared with terrestrial cellular communication networks, satellite communication has many unique advantages. Firstly, the satellite communication is not limited by a geographical location of the users. For example, the terrestrial communications generally cannot cover areas such as oceans, mountains, and deserts where communication equipment cannot be installed or where no communication coverage is provided due to sparse populations. For the satellite communication, since a single satellite may cover a large terrestrial area and the satellite may perform an orbit motion around the earth, theoretically every corner on the earth may be covered by the satellite communication. Secondly, the satellite communication has a significant social value. The satellite communication may cover remote mountainous areas, poor and backward countries or regions at a lower cost, enabling people in these regions to access advanced voice communication and mobile internet technologies, which helps narrow a digital divide with developed regions and promotes development in these regions. Thirdly, the satellite communication has a long transmission distance without significant cost increases as the communication distance increases. Finally, the satellite communication has high stability and is not limited by natural disasters.

In some embodiments, communication satellites are classified based on different orbital altitudes into a low-earth orbit (LEO) satellite, a medium-earth orbit (MEO) satellite, a geostationary earth orbit (GEO) satellite, a high elliptical orbit (HEO) satellite, etc.

### 1. LEO

In some embodiments, the LEO satellite has an altitude range of 300 km-1500 km, with a corresponding orbital period of approximately 1.5 to 2 hours. A signal propagation delay for single-hop communication between users is generally less than 20 ms. A maximum satellite visibility time is 20 minutes. A signal propagation distance is short, link loss is low, and a requirement for a transmitting power of a user terminal is not high.

### 2. GEO

In some embodiments, the GEO satellite has an orbital altitude of 35,786 km and an orbital period around the earth of 24 hours. The signal propagation delay for the single-hop communication between users is generally 250 ms.

Table 1 provides satellite altitudes, orbits, and satellite coverage ranges for typical NTN networks.

**Table 1**

| platform | altitude range | orbit | typical beam size |
|---|---|---|---|
| LEO satellite | 300-1500 km | circular orbit around the earth | 100-1000 km |
| MEO satellite | 7000-25000 km | | 100-1000 km |
| GEO satellite | 35786 km | ideal platform maintaining fixed an elevation/azimuth angle relative to a given point on the earth | 200-3500 km |
| unmanned aerial vehicle platform (including high-altitude platform) | 8-50 km ( high-altitude platform is at 20 km) | | 5-200 km |
| HEO satellite | 400-50000 km | elliptical orbit around the earth | 200-3500 km |

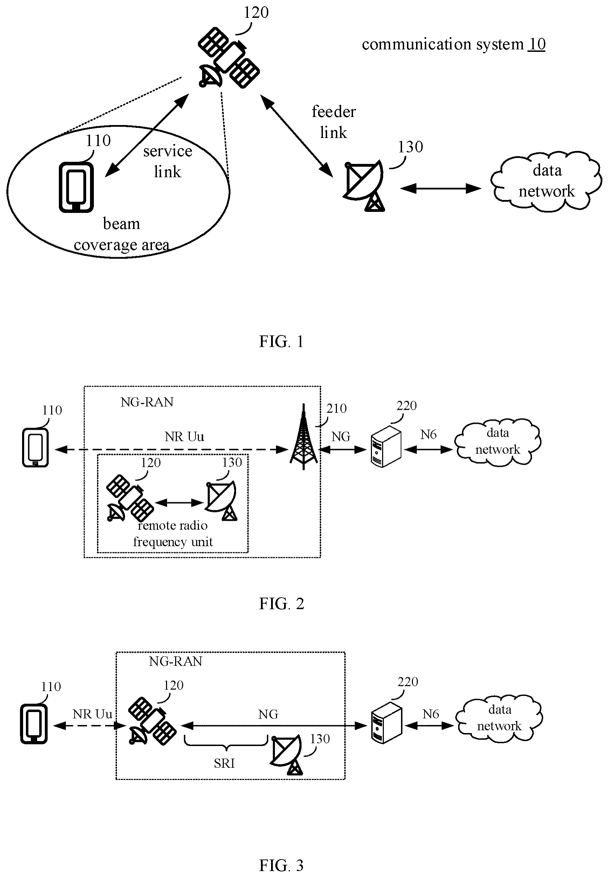

FIG. 1 is a schematic diagram illustrating a communication system 10 provided in an embodiment of the disclosure. The communication system 10 includes: a terminal 110, a satellite 120, and an NTN gateway 130. The terminal 110 communicates with the satellite 120 via a service link, the satellite 120 communicates with the NTN gateway 130 via a feeder link, and the NTN gateway 130 communicates with a data network.

It should be noted that the number of communication devices in the communication system shown in FIG. 1 is for illustration only. There may be a plurality of communication devices, and connection relationships between the communication devices may be changed based on actual conditions. The example in FIG. 1 does not limit the communication system provided in embodiments of the disclosure. For example, although only one terminal is shown in FIG. 1, in some embodiments, more terminals may exist in the communication system shown in FIG. 1 and communicate with the satellite 120.

In some embodiments, an Internet of Things (IOT) terminal includes at least one of: a bandwidth reduction and low complexity user equipment (BL UE), a UE in coverage enhancement mode (UE in CE mode), or a narrow band Internet of Things UE (NB-IOT UE).

To ensure satellite coverage and improve a system capacity of the entire satellite communication system, a satellite use multi-beam to cover the territory. A single satellite may form tens or even hundreds of beams to cover the territory. One satellite beam may cover a terrestrial area with a diameter of tens to hundreds of kilometers, forming a beam coverage area.

The method provided in embodiments of the disclosure may be applied to an NTN system. As shown in FIG. 2 and FIG. 3, an introduction to the NTN system is provided as an example.

FIG. 2 is a schematic diagram illustrating a non-terrestrial network system provided in an embodiment of the disclosure. The communication satellite in the NTN system is a transparent-mode satellite. The NTN system includes: a terminal 110, a satellite (or unmanned aerial vehicle system platform) 120, an NTN gateway 130, an access network device 210, and a core network device 220. In some embodiments, the satellite 120 and the NTN gateway 130 may form a unit in the NTN system. For example, the unit may be referred to as a remote radio frequency unit. In some embodiments, the unit may have other names, which are not limited in embodiments of the disclosure. The remote radio frequency unit and the access network device 210 may form an access network, which may be referred to as a next generation radio access network (NG-RAN). In some embodiments, the access network may have other names, which are not limited in embodiments of the disclosure.

It should be noted that the number of communication devices in the NTN system shown in FIG. 2 is for illustration only. There may be a plurality of communication devices, and connection relationships between the communication devices may be changed based on actual conditions. The example in FIG. 2 does not limit the NTN system provided in embodiments of the disclosure. For example, although only one terminal is shown in FIG. 2, in some embodiments, more terminals may exist in the communication system shown in FIG. 2 and communicate with the core network device 220 via the access network.

In some embodiments, the terminal 110 and the access network device 210 communicate via an NR Uu interface. In the architecture shown in FIG. 2, the access network device 210 may be deployed on the territory. Uplink and downlink communication between the terminal 110 and the access network device 210 may be relayed via the satellite 120 and the NTN gateway 130 (usually located on the territory). The terminal 110 communicates with the satellite 120, the satellite 120 communicates with the NTN gateway 130, the NTN gateway 130 communicates with the access network device 210, the access network device 210 communicates with the core network device 220 via an NG interface, and the core network device 220 communicates with a data network via an N6 interface.

In the NTN system, the satellite 120 may perform frequency conversion and signal amplification. The satellite 120 does not demodulate signals from the access network device 210, but only converts the signals to a satellite frequency band for transmission. The satellite 120 functions like a repeater.

FIG. 3 is a schematic diagram illustrating a non-terrestrial network system provided in an embodiment of the disclosure. The communication satellite in the NTN system is a regenerative-mode satellite. The NTN system includes: a terminal 110, a satellite 120, an NTN gateway 130, and a core network device 220. The satellite 120 and the NTN gateway 130 may form an access network, which may be referred to as an NG-RAN. In some embodiments, the access network may have other names, which are not limited in embodiments of the disclosure.

It should be noted that the number of communication devices in the NTN system shown in FIG. 3 is for illustration only. There may be a plurality of communication devices, and the connection relationships between the communication devices may be changed based on actual conditions. The example in FIG. 3 does not limit the NTN system provided in embodiments of the disclosure. For example, although only one terminal is shown in FIG. 3, in some embodiments, more terminals may exist in the communication system shown in FIG. 3 and communicate with the core network device 220 via the access network.

In some embodiments, functions of the access network device 210 are integrated into the satellite 120, that is, the satellite 120 has the functions of the access network device 210. The terminal 110 and the satellite 120 communicate via an NR Uu interface, the satellite 120 and the NTN gateway 130 communicate via a satellite radio interface (SRI), the NTN gateway 130 communicates with the core network device 220 via an NG interface, and the core network device 220 communicates with a data network via an N6 interface. In the NTN system, the satellite 120 receives signals, performs demodulation and decoding, then re-encodes and modulates the signals (i.e., a regeneration process), and sends regenerated signals via a satellite frequency band.

In the architectures shown in FIG. 2 and FIG. 3, the access network device 210 is a device configured to provide wireless communication services for the terminal 110. A connection may be established between the access network device 210 and the terminal 110 for communication, including signaling and data interaction. There may be a plurality of access network devices 210, and two adjacent access network devices 210 may communicate via wired or wireless means. The terminal 110 may switch between different access network devices 210, that is, may establish connections with different access network devices 210.

Taking a cellular communication network as an example, the access network device 210 in the cellular communication network may be a base station. The base station is a device deployed in an access network to provide a wireless communication function for the terminal 110. Base stations may include various forms of macro base stations, micro base stations, relay stations, access points, etc. In systems using different radio access technologies, names of devices with base station functionality may differ. For example, in a 5th generation new radio (5G NR) communication system, the base station may be called as a next generation node B (gNB). As evolutions of the communication technology, names of "base station" may change. For convenience of description, in embodiments of the disclosure, the aforementioned devices providing wireless communication functions for the terminal 110 are collectively referred to as the base station or the access network device.

In addition, the terminal 110 involved in embodiments of the disclosure may include various handheld devices, vehicle-mounted devices, wearable devices, computing devices, or other processing devices connected to wireless modems with wireless communication functions, as well as various forms of UEs, mobile stations (MSs), terminal devices, etc. For convenience of description, in embodiments of the disclosure, the devices mentioned above are collectively referred to as terminals. In the disclosure, the "UE" is sometimes used to represent "terminal". In embodiments of the disclosure, a "network device" may be the access network device (such as the base station) or the satellite.

Additionally, taking a 5G NTN system as an example, the NTN system may include a plurality of satellites 120. A single satellite 120 may cover a certain terrestrial area to provide wireless communication services for terminals 110 within that terrestrial area. Further, the satellites 120 may orbit around the earth. By deploying the plurality of satellites 120, communication coverage for different regions of a surface of the earth may be achieved.

In embodiments of the disclosure, the terms "network" and "system" are often used interchangeably, but those skilled in the art may understand their meanings. The technical solutions described in embodiments of the disclosure may be applicable to long term evolution (LTE) systems, 5G systems, subsequent evolved systems of 5G NR systems, or other communication systems, which are not limited in the disclosure.

It should be noted that the schematic diagrams and the introductions of the communication system and the NTN system above are for illustration only. Further, the method provided in embodiments of the disclosure may be applied not only to the aforementioned NTN system but also to other communication systems, such as subsequent evolved systems of the aforementioned NTN system, which are not limited in embodiments of the disclosure.

The following is an introduction to GNSS measurement.

The principle of the GNSS measurement is that a terminal measures distances from satellites at known positions to the terminal, and then integrates data from a plurality of satellites to determine a specific location of the terminal. To achieve this purpose, positions of the satellites may be determined from satellite ephemeris based on time recorded by satellite-borne clocks. A distance from the terminal to a satellite is approximately obtained by recording a time taken for a satellite signal to propagate to the terminal and multiplying the time by a speed of light.

The terminal may determine the position of the terminal via a GNSS measurement result (GNSS position fix) obtained by performing the GNSS measurement. Some terminals communicating via the NTN cannot support simultaneous GNSS measurement (reception) and transmission/reception of LTE messages, for example, some IOT terminals. Validity of the GNSS measurement result obtained by the terminal may only be maintained for a time period. After this time period, the GNSS measurement result obtained by the terminal becomes outdated. At this time, the terminal needs to perform the GNSS measurement again to obtain a new GNSS measurement result, so as to accurately determine the position of the terminal (since movement of the terminal may cause inaccuracy of previous measurement results). Since the terminal does not support the simultaneous GNSS measurement and transmission/reception of LTE message and may only perform one of the GNSS measurement and the transmission/reception of LTE message, a problem arises that the terminal cannot perform the GNSS measurement during transmission/reception of messages.

In the method provided in embodiments of the disclosure, by configuring a first measurement gap for GNSS measurement for a terminal, the terminal is capable of performing the GNSS measurement in the first measurement gap. The first measurement gap may be set based on actual conditions, for example, set during a process of transmission/reception of LTE messages by the terminal, which may avoid a problem that the terminal cannot perform the GNSS measurement in a case that a GNSS measurement result of the terminal is outdated.

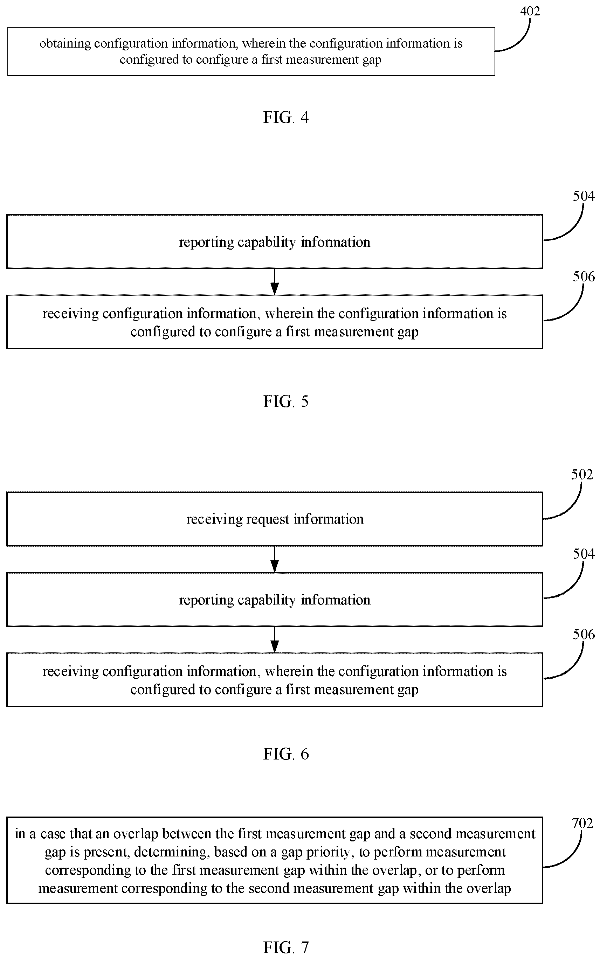

FIG. 4 is a flow chart illustrating a method for GNSS measurement provided in an embodiment of the disclosure. The method may be performed by a terminal. The method includes the following step 402.

At step 402, configuration information is obtained, in which the configuration information is used to configure a first measurement gap.

The first measurement gap is used for the GNSS measurement. After obtaining the first measurement gap, the terminal is capable of obtaining a GNSS measurement result by performing the GNSS measurement within the first measurement gap.

In some embodiments, the first measurement gap may be referred to as a GNSS measurement gap. In some embodiments, the first measurement gap has other names, such as a measurement gap for the GNSS measurement, a measurement gap dedicated to the GNSS measurement, or a gap for performing the GNSS measurement. The specific name of the first measurement gap is not limited in embodiments of the disclosure.

The GNSS measurement result is information obtained by the terminal via the GNSS measurement to determine the position of the terminal. In some embodiments, the GNSS measurement result has other names, for example, the GNSS measurement result may also be referred to as a GNSS position fix. The specific name of the GNSS measurement result is not limited in embodiments of the disclosure.

In some embodiments, the terminal obtains the first measurement gap for the GNSS measurement by receiving the configuration information. For example, the terminal obtains the first measurement gap for the GNSS measurement by receiving the configuration information sent by a network device. The terminal may also obtain the first measurement gap by receiving the configuration information sent by other communication devices, which is not limited in embodiments of the disclosure.

In some embodiments, the configuration information may also be preconfigured in the terminal. The terminal obtains the first measurement gap for the GNSS measurement based on the configuration information preconfigured in the terminal.

In an example, the terminal obtaining the first measurement gap does not support simultaneous GNSS measurement and transmission/reception of LTE messages. For example, the terminal is an IOT terminal. In a case that the IOT terminal does not support the simultaneous GNSS measurement and transmission/reception of LTE messages, the first measurement gap may be set during a process of the transmission/reception of LTE messages by the terminal. The first measurement gap may also be set in other time periods based on actual conditions, for example, during execution of other procedures by the terminal, which is not limited in embodiments of the disclosure.

### For configuration of the first measurement gap:

In some embodiments, the terminal obtains the first measurement gap by receiving the configuration information sent by the network device, the configuration information being configured to indicate the first measurement gap.

In an example, the configuration information includes at least one of: a starting system frame number (SFN) and a subframe; a repetition period; an offset; a gap length; a timing advance (TA) of the gap; a gap type; a gap identity; a gap priority; information indicating that the gap is used for the GNSS measurement; or a gap sharing strategy.

In an example, the starting SFN and the subframe of the measurement gap are configured to indicate a starting position in a time domain of a measurement gap indicated by the configuration information.

In an example, the repetition period of the measurement gap is configured to indicate periodic repetition in the time domain of the measurement gap indicated by the configuration information.

In an example, the offset of the measurement gap is configured to indicate an offset in the time domain of a starting position of the measurement gap indicated by the configuration information relative to a reference position.

In an example, the gap length of the measurement gap is configured to indicate a duration occupied in the time domain by the measurement gap indicated by the configuration information.

In an example, the TA of the measurement gap is configured to ensure time alignment. In a case that there is a delay in information transmission, in order to ensure the time alignment between the terminal and the network device, the terminal requires a TA amount for performing the GNSS measurement in the first measurement gap to achieve the time alignment with the network device.

In an example, the type of the measurement gap is configured to reflect a configuration mode of the measurement gap indicated by the configuration information, for example, a measurement gap configured for per UE (per UE gap), a measurement gap configured for per frequency range 1 (FR1) (per FR1 gap), or a measurement gap configured for per frequency range 2 (FR2) (per FR2 gap), in which FR1 and FR2 are two frequency ranges defined in 5G NR.

In an example, the gap identity is configured to identify the measurement gap indicated by the configuration information, for example, an identity document (ID) of the measurement gap.

In an example, the gap priority of the measurement gap is configured to indicate a priority of performing the GNSS measurement in a case that the terminal also performs measurements other than the GNSS measurement within the measurement gap indicated by the configuration information. For example, the measurements other than the GNSS measurement include intra-frequency cell measurement, inter-frequency cell measurement, and serving cell measurement, etc.

In an example, the information indicating whether the gap is used for the GNSS measurement is configured to indicate whether the measurement gap indicated by the configuration information is used for the GNSS measurement, that is, whether the measurement gap indicated by the configuration information is the first measurement gap for the GNSS measurement. In some embodiments, the information indicating whether the gap is used for the GNSS measurement is information indicating that the gap is used for the GNSS measurement. In some embodiments, the information indicating whether the gap is used for the GNSS measurement is information indicating that the gap is not used for the GNSS measurement.

In addition to carrying the information indicating whether the gap is used for the GNSS measurement in the configuration information for configuring the measurement gap to directly indicate to the terminal whether the measurement gap configured by the configuration information is used for the GNSS measurement, whether the measurement gap configured by the configuration information is used for the GNSS measurement may also be indicated to the terminal by other manners.

In some embodiments, the configuration information does not carry information indicating whether the gap is used for the GNSS measurement. In a case that the configuration information obtained by the terminal includes one or more target information in the configuration information, the terminal determines that the measurement gap configured by the configuration information is used for the GNSS measurement, the target information being predefined. For example, the target information is the gap sharing strategy, that is, in a case that the configuration information includes the gap sharing strategy, the terminal determines that the measurement gap configured by the configuration information is used for the GNSS measurement.

In some embodiments, the configuration information is sent by the network device to the terminal. The network device may send the configuration information to the terminal multi-times to indicate whether the measurement gap configured by the configuration information is used for the GNSS measurement. In some embodiments, the network device first sends to the terminal configuration information that does not carry the information indicating whether the gap is used for the GNSS measurement, so that the terminal obtains the measurement gap configured by the configuration information, but at this case the terminal does not know the purpose of the measurement gap configured by the configuration information. Afterwards, the network device sends to the terminal configuration information carrying the information indicating whether the gap is used for the GNSS measurement, so that the terminal learns whether the previously configured measurement gap is used for the GNSS measurement. For example, when the terminal requires performing the GNSS measurement, the network device sends to the terminal the configuration information carrying information indicating that the gap is used for the GNSS measurement, causing the terminal to learn that the previously configured measurement gap is used for the GNSS measurement.

In some embodiments, the configuration information preconfigured in the terminal does not include the information indicating whether the gap is used for the GNSS measurement, and the network device sends to the terminal the configuration information carrying the information indicating whether the gap is used for the GNSS measurement, to indicate whether the measurement gap indicated by the configuration information preconfigured in the terminal is used for the GNSS measurement.

It should be noted that the configuration information may also include other information different from the information indicating whether the gap is used for the GNSS measurement. The other information may indicate to the terminal whether the measurement gap configured by the configuration information is used for the GNSS measurement, and the other information may exist independently or be combined with the above information in the configuration information, which is not limited in embodiments of the disclosure.

In an example, the gap sharing strategy is configured to indicate a proportion of the first measurement gap and a cell measurement gap within a gap used for measurement. The cell measurement gap is used for the terminal to perform cell measurement, for example, intra frequency cell measurement or inter frequency cell measurement.

For example, the intra frequency cell measurement or the inter frequency cell measurement occupies 30% of the measurement gap, and the first measurement gap occupies 70% of the measurement gap, then a delay of the intra frequency cell measurement or the inter frequency cell measurement needs to be divided by 30% based on a base delay, and a delay of the first measurement gap needs to be divided by 70% based on the base delay. The base delay is a default delay specified for the measurement. The smaller the proportion occupied within the measurement gap, the larger the required delay, to ensure priority excitation of measurement that consumes more time.

In some embodiments, part of the information in the configuration information is predefined by a communication protocol. For example, the communication protocol predefines that the repetition period includes a repetition period 1 and a repetition period 2. When the terminal obtains the configuration information to determine the first measurement gap, the terminal randomly determines a repetition period to be used from the repetition period 1 and the repetition period 2, or the terminal determines the repetition period to be used based on requirements for performing the GNSS measurement, or the terminal determines the repetition period to be used from the predefined repetition periods based on an indication of the network. For predefined manners and usage manners of other information in the configuration information, reference may be made to the above description of the repetition period, which is not repeated in embodiments of the disclosure. In some embodiments, when part of the information in the configuration information is not indicated, the unindicated part of information has predefined default values. For example, the gap type, the gap identity, and information indicating that (whether) the gap is used for the GNSS measurement may be explicitly or implicitly indicated. For example, if the gap type is not indicated in the configuration information, a default type is a measurement gap configured per UE. The gap identity may also be determined without indication, determined based on information for uniquely identifying the terminal or predefined information.

In some embodiments, the first measurement gap is dedicated to the GNSS measurement, that is, within the first measurement gap, the terminal is only capable of performing the GNSS measurement.

In an example, in a case that the terminal requires the first measurement gap dedicated to the GNSS measurement, the terminal sends a first indication to the network device. The first indication indicates that the terminal requires the first measurement gap dedicated to the GNSS measurement. Thus, the network device configures the first measurement gap dedicated to the GNSS measurement for the terminal. In an example, the first measurement gap is configured based on a legacy measurement gap.

In some embodiments, the first measurement gap multiplexes a second measurement gap, the second measurement gap being configured for measurement other than the GNSS measurement. That is, within the first measurement gap, the terminal is capable of performing not only the GNSS measurement but also measurement other than the GNSS measurement.

In an example, the first measurement gap may multiplex the second measurement gap in a case that the second measurement gap is not configured with a concurrent measurement gap. The concurrent measurement gap is configured for measurement other than the GNSS measurement performed concurrently with the second measurement gap. That is, within the second measurement gap and the concurrent measurement gap of the second measurement gap, the terminal concurrently performs the measurement other than the GNSS measurement.

In some embodiments, in a case that no measurement gap dedicated to the GNSS measurement is configured for the terminal, the terminal may also use a gap configured by a measurement gap configuration (MeasGapConfig) to perform the GNSS measurement. The MeasGapConfig is a configuration parameter for a gap not used for the GNSS measurement, which may be regarded as an existing measurement gap configuration parameter. The existing measurement gap is configured for the measurement other than the GNSS measurement.

In some embodiments, the terminal may report capability information to the network device. In some embodiments, the capability information includes information indicating that the terminal requires performing the GNSS measurement via the first measurement gap. In some embodiments, the capability information includes information indicating that the terminal supports performing the GNSS measurement via the first measurement gap. In some embodiments, the capability information includes both the information indicating that the terminal requires performing the GNSS measurement via the first measurement gap and the information indicating that the terminal supports performing the GNSS measurement via the first measurement gap. The network device may configure the first measurement gap for the GNSS measurement for the terminal based on the capability information.

For example, when the terminal reports either the information indicating that the terminal requires performing the GNSS measurement via the first measurement gap or the information indicating that the terminal supports performing the GNSS measurement via the first measurement gap, the network device configures the first measurement gap for the GNSS measurement for the terminal. Alternatively, when the terminal reports the information indicating that the terminal supports performing the GNSS measurement via the first measurement gap, the network device learns the capability of the terminal. Subsequently, when the terminal reports the information indicating that the terminal requires performing the GNSS measurement via the first measurement gap, the network device configures the first measurement gap for the GNSS measurement for the terminal.

In some embodiments, the terminal may spontaneously report the capability information to the network device. In some embodiments, the capability information is reported by the terminal in response to a request from the network device. That is, the terminal receives request information sent by the network device, the request information being configured to request the terminal to report the capability information.

In some embodiments, the first indication sent by the terminal to the network device and the capability information reported by the terminal to the network device are carried in a same message. In some embodiments, the first indication sent by the terminal to the network device and the capability information reported by the terminal to the network device are carried in different messages. For example, the terminal first reports the capability information to the network device to instruct the network device that it is required to configure the first measurement gap for the terminal, and then sends the first indication to instruct the network device to configure the first measurement gap dedicated to the GNSS measurement for the terminal.

In some embodiments, in a case that the terminal requires performing the GNSS measurement and the terminal has not obtained the first measurement gap or the first measurement gap does not satisfy a condition for performing the GNSS measurement by the terminal, e.g., a duration of the first measurement gap cannot satisfy a duration required for the terminal to perform the GNSS measurement, the terminal sends a third indication to the network device. The third indication indicates that the terminal requires performing the GNSS measurement. The network device may configure for the terminal, based on the third indication, a measurement gap satisfying the GNSS measurement requirement of the terminal.

In some embodiments, in a case that the terminal currently does not require performing the GNSS measurement, the terminal may send a fourth indication to the network device. The fourth indication indicates that the terminal does not require performing the GNSS measurement. The network device may not configure a measurement gap for the GNSS measurement for the terminal based on the fourth indication, thus achieving power saving for the terminal.

### For the GNSS measurement:

In some embodiments, in a case that an overlap between the first measurement gap and a second measurement gap is present, the terminal determines, based on a gap priority, to perform measurement corresponding to the first measurement gap within the overlap or to perform measurement corresponding to the second measurement gap within the overlap. The second measurement gap is configured for measurement other than the GNSS measurement. This solution may ensure that the terminal executes an item with a higher priority within the overlap.

For example, the second measurement gap is a measurement gap configured via measurement gap configuration (MeasGapConfig) for per terminal, or a measurement gap configured via measurement gap configuration (MeasGapConfigPerCC) for per carrier, or a measurement gap configured via measurement gap configuration (MeasGapConfigDensePRS) for a dense positioning reference signal (PRS).

In some embodiments, the priority of the first measurement gap may adopt a network configuration manner. In some embodiments, a system (communication protocol) may agree that the priority of the first measurement gap is higher or lower than priorities of other measurement gaps.

In some embodiments, when the network configuration manner is adopted, the configuration information for the first measurement gap sent by the network device to the terminal indicates the priority of the first measurement gap. In some embodiments, when a system-agreed manner is adopted, it may be agreed that the priority of the first measurement gap is higher or lower than a priority of a measurement gap for the intra frequency cell measurement or the inter frequency cell measurement, or agreed that the priority of the first measurement gap is higher or lower than a priority of a measurement gap for the PRS measurement.

### For performing the GNSS measurement outside the first measurement gap:

In some embodiments, the terminal is capable of performing the GNSS measurement not only within the first measurement gap but also outside the first measurement gap.

In some embodiments, in a case that the first measurement gap is after an outdated time point, the terminal performs GNSS measurement outside the first measurement gap. The outdated time point is a time point when the GNSS measurement result of the terminal is outdated. That is, if there is no measurement gap available for the GNSS measurement before the GNSS measurement result becomes outdated, the terminal is capable of performing the GNSS measurement outside the first measurement gap, thus avoiding inaccurate positioning caused by the terminal being unable to perform the GNSS measurement when the GNSS measurement result of the terminal is outdated.

In some embodiments, in a case that the GNSS measurement result of the terminal is outdated, the terminal is capable of performing the GNSS measurement outside the first measurement gap.

In some embodiments, the terminal spontaneously performs the GNSS measurement outside the first measurement gap under the above conditions. For example, a capability of the terminal to perform the GNSS measurement outside the first measurement gap is preconfigured in the terminal.

In some embodiments, whether the terminal is capable of performing the GNSS measurement outside the first measurement gap is indicated by the network device.

In an example, the terminal receives a second indication sent by the network device. The second indication indicates that the terminal is allowed to perform the GNSS measurement outside the first measurement gap. That is, in a case where the network device indicates that the terminal is allowed to perform the GNSS measurement outside the first measurement gap, the terminal may perform the GNSS measurement outside the first measurement gap based on the aforementioned condition.

### For the GNSS measurement and serving cell measurement:

In some embodiments, the terminal performs the serving cell measurement after an end of the first measurement gap or before the end of the first measurement gap. This solution may avoid a problem that the terminal cannot perform the serving cell measurement timely due to performing the GNSS measurement, i.e., a prolonged interruption of communication with the serving cell, which would affect communication quality of the terminal. The serving cell of the terminal is a cell that the terminal accesses or that provides communication services to the terminal.

In some embodiments, the terminal performs the serving cell measurement after the end of the first measurement gap or before the end of the first measurement gap based on an indication of indication information. That is, only when the network device indicates the terminal via the indication information, the terminal may perform the serving cell measurement after the end of the first measurement gap or before the end of the first measurement gap. In an example, the indication information may be carried in the configuration information of the first measurement gap or in other messages sent by the network device to the terminal, which is not limited in embodiments of the disclosure.

In some embodiments, in a case that the terminal has not performed the serving cell measurement within a configured duration, the terminal performs the serving cell measurement after the end of the first measurement gap or before the end of the first measurement gap. The configured duration is configured by the network device or predefined, for example, the configured duration is carried in the configuration information of the first measurement gap.

In some embodiments, in a case that the terminal has not performed the serving cell measurement within a configured number of times (N), the terminal performs the serving cell measurement after the end of the first measurement gap or before the end of the first measurement gap. The configured number of times is configured by the network device or predefined, for example, the configured number of times is carried in the configuration information of the first measurement gap. The number of times that the terminal needs to perform the serving cell measurement is determined based on time, frequency, period, etc., for which the terminal measures the serving cell.

By coordinating a time for the terminal to perform the GNSS measurement and a time for the terminal to perform the serving cell measurement via the indication of the network device as described above, the network device may coordinate tasks of the terminal based on actual conditions (e.g., service quality of the serving cell), fully avoiding the problem that the terminal cannot perform the serving cell measurement timely due to performing the GNSS measurement, i.e., the prolonged interruption of communication with the serving cell, which would affect the communication quality of the terminal.

In summary, in the method provided in embodiments of the disclosure, by configuring the first measurement gap for the GNSS measurement for the terminal, the terminal is capable of performing the GNSS measurement in the first measurement gap. The first measurement gap may be set based on actual conditions, which may avoid the problem that the terminal cannot perform the GNSS measurement in a case that the GNSS measurement result of the terminal is outdated.

### For a process of the terminal obtaining the first measurement gap:

Based on the embodiments shown in FIG. 4, in an example, the configuration information is obtained by the terminal via reception. In some embodiments, before receiving the configuration information, the terminal further needs to report the capability information of the terminal. A process of configuring the first measurement gap for the terminal is introduced in the following embodiments.

FIG. 5 is a flow chart illustrating a method for GNSS measurement provided in an embodiment of the disclosure. The method may be applied to the terminal. In some embodiments, the method may be applied to the terminal in the systems shown in FIG. 1 to FIG. 3. The method includes the following step 504 and step 506.

At step 504: capability information is reported.

In some embodiments, the capability information includes information indicating that the terminal requires performing the GNSS measurement via the first measurement gap. In some embodiments, the capability information includes information indicating that the terminal supports performing the GNSS measurement via the first measurement gap. In some embodiments, the capability information includes both the information indicating that the terminal requires performing the GNSS measurement via the first measurement gap and the information indicating that the terminal supports performing the GNSS measurement via the first measurement gap.

In some embodiments, the terminal reports the capability information to the network device. In some embodiments, the terminal spontaneously reports the capability information to the network device. In some embodiments, the capability information is reported by the terminal in response to a request from the network device. In some embodiments, the terminal reports the capability information to other communication devices in addition to the network device, which is not limited in embodiments of the disclosure.

At step 506: configuration information is received, in which the configuration information is used to configure a first measurement gap.

The first measurement gap is used for the GNSS measurement. After obtaining the first measurement gap, the terminal is capable of obtaining a GNSS measurement result by performing the GNSS measurement within the first measurement gap.

For detailed content of the configuration information, reference may be made to the introduction of the configuration information in step 402, which is not repeated in embodiments of the disclosure.

In an example, a receiver of the capability information reported by the terminal may be the same as or different from a sender of the configuration information. In some embodiments, both the receiver of the capability information and the sender of the configuration information are the network device. In some embodiments, the receiver of the capability information is a communication device other than the network device, and the sender of the configuration information is the network device. In an example, the communication device other than the network device may be a core network device or a terminal communicating with the terminal via a side link. After receiving the capability information reported by the terminal, the communication device other than the network device may forward the capability information to the network device corresponding to the terminal, thus indicating the network device to send the configuration information to the terminal.

In some embodiments, the first measurement gap is dedicated to the GNSS measurement. In some embodiments, the first measurement gap multiplexes a second measurement gap, the second measurement gap being configured for measurement other than the GNSS measurement.

In some embodiments, in a case that the terminal requires performing the GNSS measurement and the terminal has not obtained the first measurement gap or the first measurement gap does not satisfy a condition for performing the GNSS measurement by the terminal, the terminal sends a third indication to the network device. The third indication indicates that the terminal requires performing the GNSS measurement. The network device may configure for the terminal, based on the third indication, a measurement gap satisfying the GNSS measurement requirement of the terminal.

In some embodiments, in a case that the terminal currently does not require performing the GNSS measurement, the terminal may send a fourth indication to the network device. The fourth indication indicates that the terminal does not require performing the GNSS measurement. The network device may not configure a measurement gap for the GNSS measurement for the terminal based on the fourth indication, thus achieving power saving for the terminal.

It should be noted that the step of sending the third indication by the terminal to the network device and the step of sending the fourth indication by the terminal to the network device may be implemented as separate embodiments and may be combined with other embodiments.

In some embodiments, the capability information is reported by the terminal based on a request. As shown in FIG. 6, based on the embodiment shown in FIG. 5, the method further includes the following step 502.

At step 502: request information is received.

In some embodiments, the request information is sent by the network device to the terminal. In some embodiments, the request information is sent to the terminal by a communication device other than the network device, for example, the core network device or a terminal communicating with the terminal via a side link, which is not limited in embodiments of the disclosure.

The request information is configured to indicate the terminal to report the capability information to the network device. After requesting the terminal to report the capability information and receiving the capability information reported by the terminal, the network device may configure the first measurement gap for the terminal. For specific implementation of configuring the first measurement gap for the terminal by the network device based on the capability information, reference may be made to related descriptions in the embodiments of FIG. 4, which is not repeated in embodiments of the disclosure.

In summary, in the method provided in embodiments of the disclosure, by configuring the first measurement gap for the GNSS measurement for the terminal, the terminal is capable of performing the GNSS measurement in the first measurement gap. The first measurement gap may be set based on actual conditions, which may avoid a problem that the terminal cannot perform the GNSS measurement in a case that a GNSS measurement result of the terminal is outdated. In addition, the method provided in the embodiments also implements targeted configuration of the first measurement gap for terminals having a corresponding capability. Further, the method provided in the embodiments also implements obtaining a capability of the terminal via the request, thus configuring the first measurement gap for the terminal having the corresponding capability, achieving flexible configuration of the first measurement gap for the terminal.

It should be noted that, without conflict, the above embodiments in the disclosure may be combined with other embodiments, steps of other embodiments, or sub-steps of steps in other embodiments. Further, the sequence of steps of the method provided in embodiments of the disclosure may be adjusted appropriately, and steps may be added or deleted based on actual situations.

For a process of the terminal performing the measurement in a case that an overlap between measurement gaps is present:

In the method provided in embodiments of the disclosure, in a case that an overlap between a first measurement gap configured for the terminal and a second measurement gap is present, the terminal is capable of determining, based on a priority, an item to be executed with priority during the overlap. The solution is introduced in the following embodiments.

FIG. 7 is a flow chart illustrating a method for GNSS measurement provided in an embodiment of the disclosure. The method may be applied to a terminal. In some embodiments, the method may be applied to the terminal in the systems shown in FIG. 1 to FIG. 3. The method includes the following step 702.

At step 702: in a case that an overlap between the first measurement gap and a second measurement gap is present, performing measurement corresponding to the first measurement gap within the overlap, or performing measurement corresponding to the second measurement gap within the overlap is determined based on a gap priority.

The first measurement gap is a measurement gap obtained by the terminal for the GNSS measurement. For a process of the terminal obtaining the first measurement gap, reference may be made to related descriptions in the embodiments of FIG. 4, which are not repeated in embodiments of the disclosure. The second measurement gap is configured for measurement other than the GNSS measurement. This solution may ensure that the terminal executes an item with a higher priority within the overlap.

For example, the second measurement gap is a measurement gap configured via measurement gap configuration for per terminal, or a measurement gap configured via measurement gap configuration for per carrier, or a measurement gap configured via measurement gap configuration for a dense PRS.

In some embodiments, the priority of the first measurement gap may adopt a network configuration manner. In some embodiments, a system (communication protocol) may agree that the priority of the first measurement gap is higher or lower than priorities of other measurement gaps.

In some embodiments, when the network configuration manner is adopted, the configuration information for the first measurement gap sent by the network device to the terminal indicates the priority of the first measurement gap. In some embodiments, when a system-agreed manner is adopted, it may be agreed that the priority of the first measurement gap is higher or lower than a priority of a measurement gap for the intra frequency cell measurement or the inter frequency cell measurement, and agreed that the priority of the first measurement gap is higher or lower than a priority of a measurement gap for the PRS measurement.

In summary, the method provided in the embodiment, by which the terminal determines, based on the gap priority, to perform the measurement corresponding to the first measurement gap within the overlap between the first measurement gap and the second measurement gap or to perform the measurement corresponding to the second measurement gap within the overlap, may ensure that the terminal executes the item with a higher priority within the overlap.

It should be noted that steps in the above embodiment may be combined with other embodiments. For example, step 702 may be combined with all steps, part of steps, or optional implementations provided in the embodiments shown in FIG. 4, FIG. 5, and FIG. 6 to obtain a new embodiment.

For a process of the terminal performing the GNSS measurement outside the first measurement gap:

The method provided in embodiments of the disclosure also allows the terminal to perform the GNSS measurement outside the first measurement gap, which may avoid inaccurate positioning caused by the terminal being unable to perform the GNSS measurement when the GNSS measurement result of the terminal is outdated. The solution is introduced in the following embodiments.

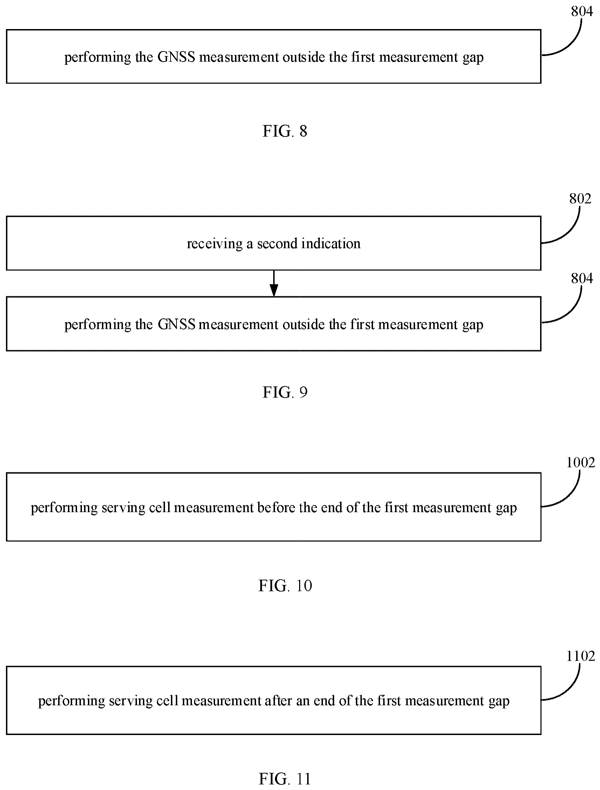

FIG. 8 is a flow chart illustrating a method for GNSS measurement provided in an embodiment of the disclosure. The method may be applied to a terminal. In some embodiments, the method may be applied to the terminal in the systems shown in FIG. 1 to FIG. 3. The method includes the following step 804.

At step 804: the GNSS measurement is performed outside the first measurement gap.

The first measurement gap is a measurement gap obtained by the terminal for the GNSS measurement. For a process of the terminal obtaining the first measurement gap, reference may be made to related descriptions in the embodiments of FIG. 4, which are not repeated in embodiments of the disclosure.

In some embodiments, in a case that the first measurement gap is after an outdated time point, the terminal performs GNSS measurement outside the first measurement gap. The outdated time point is a time point when the GNSS measurement result of the terminal is outdated. That is, if there is no measurement gap available for the GNSS measurement before the GNSS measurement result becomes outdated, the terminal is capable of performing the GNSS measurement outside the first measurement gap, thus avoiding inaccurate positioning caused by the terminal being unable to perform the GNSS measurement when the GNSS measurement result of the terminal is outdated.

In some embodiments, in a case that the GNSS measurement result of the terminal is outdated, the terminal is capable of performing the GNSS measurement outside the first measurement gap.

In some embodiments, in case of satisfying the above condition, the terminal is capable of spontaneously performing the GNSS measurement outside the first measurement gap.

In some embodiments, whether the terminal is capable of performing the GNSS measurement outside the first measurement gap is determined by the terminal based on an indication. As shown in FIG. 9, based on the embodiments shown in FIG. 8, the method further includes the following step 802.

At step 802: a second indication is received.

The second indication indicates that the terminal is allowed to perform the GNSS measurement outside the first measurement gap.

In some embodiments, the terminal receives the second indication sent by the network device. That is, when the network device indicates that the terminal is allowed to perform the GNSS measurement outside the first measurement gap, the terminal may perform the GNSS measurement outside the first measurement gap under the condition described in step 804. In some embodiments, the terminal may also receive the second indication sent by a communication device other than the network device, which is not limited in embodiments of the disclosure.

In summary, in the method provided in the embodiment, the terminal performs the GNSS measurement outside the first measurement gap, which may avoid the problem of inaccurate positioning caused by the terminal being unable to perform the GNSS measurement when the GNSS measurement result of the terminal is outdated.

It should be noted that, without conflict, the above embodiments in the disclosure may be combined with other embodiments, steps of other embodiments, or sub-steps of steps in other embodiments. For example, step 804 may be combined with all steps, part of steps, or optional implementations provided in the embodiments shown in FIG. 4, FIG. 5, and FIG. 6 to obtain a new embodiment.

For the GNSS measurement and the serving cell measurement of the terminal:

The method provided in embodiments of the disclosure also coordinates the GNSS measurement and the serving cell measurement performed by the terminal, to avoid a problem that the terminal cannot perform the serving cell measurement timely due to performing the GNSS measurement, i.e., a prolonged interruption of communication with the serving cell, which would affect communication quality of the terminal. The solution is introduced in the following embodiments.

FIG. 10 is a flow chart illustrating a method for GNSS measurement provided in an embodiment of the disclosure. The method may be applied to a terminal. In some embodiments, the method may be applied to the terminal in the systems shown in FIG. 1 to FIG. 3. The method includes the following step 1002.

At step 1002: the terminal performs the serving cell measurement before the end of the first measurement gap.

The first measurement gap is a measurement gap obtained by the terminal for the GNSS measurement. For a process of the terminal obtaining the first measurement gap, reference may be made to related descriptions in the embodiments of FIG. 4, which are not repeated in embodiments of the disclosure.

In some embodiments, performing serving cell measurement by the terminal before the end of the first measurement gap may include the terminal performing the serving cell measurement within the first measurement gap. This solution may avoid the problem that the terminal cannot perform the serving cell measurement timely due to performing the GNSS measurement and prolonged occupation of GNSS measurement, i.e., a prolonged interruption of communication with the serving cell, which would affect communication quality of the terminal. The serving cell of the terminal is a cell that the terminal accesses or that provides communication services to the terminal.

In some embodiments, the terminal performs the serving cell measurement before the end of the first measurement gap based on an indication of indication information. In an example, the indication information may be carried in the configuration information of the first measurement gap or in other messages sent by the network device to the terminal, which is not limited in embodiments of the disclosure.

In some embodiments, in a case that the terminal has not performed the serving cell measurement within a configured duration, the terminal performs the serving cell measurement before the end of the first measurement gap. The configured duration is configured by the network device or predefined, for example, the configured duration is carried in the configuration information of the first measurement gap.

In some embodiments, in a case that the terminal has not performed the serving cell measurement within a configured number of times (N), the terminal performs the serving cell measurement before the end of the first measurement gap. The configured number of times is configured by the network device or predefined, for example, the configured number of times is carried in the configuration information of the first measurement gap. The number of times that the terminal needs to perform the serving cell measurement is determined based on time, frequency, period, etc., for which the terminal measures the serving cell.

FIG. 11 is a flow chart illustrating a method for GNSS measurement provided in an embodiment of the disclosure. The method may be applied to a terminal. In some embodiments, the method may be applied to the terminal in the systems shown in FIG. 1 to FIG. 3. The method includes the following step 1102.

At step 1102, the terminal performs the serving cell measurement after an end of the first measurement gap.

The first measurement gap is a measurement gap obtained by the terminal for the GNSS measurement. For a process of the terminal obtaining the first measurement gap, reference may be made to related descriptions in the embodiments of FIG. 4, which are not repeated in embodiments of the disclosure.

Performing the serving cell measurement by the terminal after the end of the first measurement gap may ensure that the terminal has sufficient time to perform the GNSS measurement within the first measurement gap, which improves positioning accuracy of the terminal. Meanwhile, triggering the serving cell measurement after the first measurement gap may also avoid a prolonged interruption of communication between the termina and the serving cell, which would affect communication quality of the terminal.

In some embodiments, the terminal performs the serving cell measurement after the end of the first measurement gap based on an indication of indication information. In an example, the indication information may be carried in the configuration information of the first measurement gap or in other messages sent by the network device to the terminal, which is not limited in embodiments of the disclosure.

In some embodiments, in a case that the terminal has not performed the serving cell measurement within a configured duration, the terminal performs the serving cell measurement after the end of the first measurement gap. The configured duration is configured by the network device or predefined, for example, the configured duration is carried in the configuration information of the first measurement gap.

In some embodiments, in a case that the terminal has not performed the serving cell measurement within a configured number of times (N), the terminal performs the serving cell measurement after the end of the first measurement gap. The configured number of times is configured by the network device or predefined, for example, the configured number of times is carried in the configuration information of the first measurement gap. The number of times that the terminal needs to perform the serving cell measurement is determined based on time, frequency, period, etc., for which the terminal measures the serving cell.

In summary, in the method provided in the embodiment, by coordinating the GNSS measurement and the serving cell measurement performed by the terminal, a problem that the terminal cannot perform the serving cell measurement timely due to performing the GNSS measurement, which would affect communication quality of the terminal, can be avoided.

It should be noted that steps in the above embodiment may be combined with other embodiments. For example, step 1002 and step 1102 may be combined with all steps, part of steps, or optional implementations provided in the embodiments shown in FIG. 4, FIG. 5, and FIG. 6 to obtain a new embodiment.

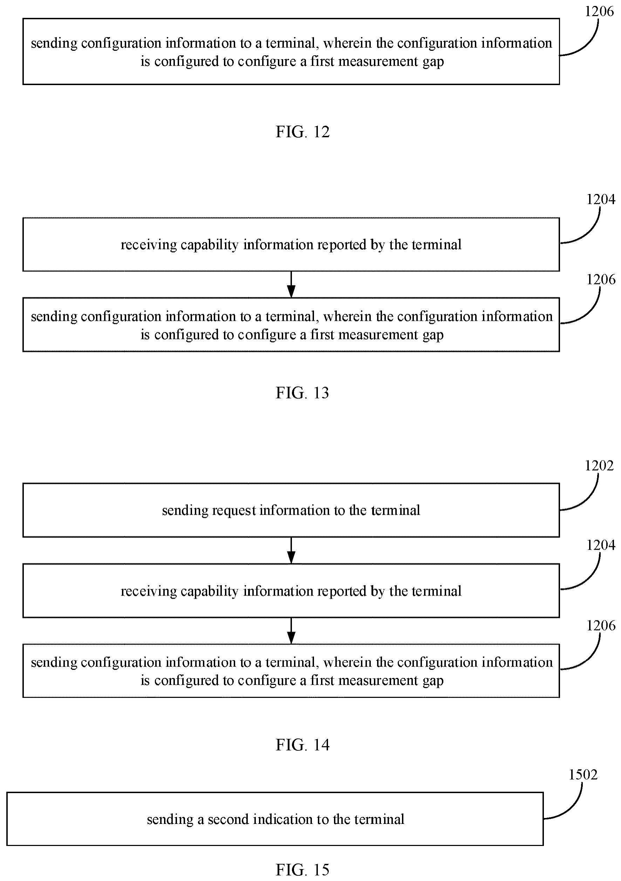

FIG. 12 is a flow chart illustrating a method for GNSS measurement provided in an embodiment of the disclosure. This method may be applied in a network device. The method includes the following step 1206.

At step 1206, configuration information is sent to a terminal, in which the configuration information is used to configure a first measurement gap

The first measurement gap is used for the GNSS measurement. After obtaining the first measurement gap, the terminal is capable of obtaining a GNSS measurement result by performing the GNSS measurement within the first measurement gap.

### For configuration of the first measurement gap:

In some embodiments, the network device configures the first measurement gap for the terminal by sending the configuration information to the terminal, the configuration information being configured to indicate the first measurement gap. For detailed content of the configuration information, reference may be made to the introduction of the configuration information in step 402, which is not repeated in embodiments of the disclosure.

In some embodiments, the first measurement gap is dedicated to the GNSS measurement, that is, within the first measurement gap, the terminal may only capable of performing the GNSS measurement. In some embodiments, the first measurement gap multiplexes a second measurement gap, the second measurement gap being configured for measurement other than the GNSS measurement. That is, within the first measurement gap, the terminal is capable of performing not only the GNSS measurement but also measurement other than the GNSS measurement.

In some embodiments, in a case that the terminal requires the first measurement gap dedicated to the GNSS measurement, the network device may receive a first indication sent by the terminal. The first indication indicates that the terminal requires the first measurement gap dedicated to the GNSS measurement. The network device may configure the first measurement gap dedicated to the GNSS measurement for the terminal based on the first indication.

In some embodiments, the network device may receive capability information reported by the terminal. In some embodiments, the capability information includes information indicating that the terminal requires performing the GNSS measurement via the first measurement gap. In some embodiments, the capability information includes information indicating that the terminal supports performing the GNSS measurement via the first measurement gap. In some embodiments, the capability information includes both the information indicating that the terminal requires performing the GNSS measurement via the first measurement gap and the information indicating that the terminal supports performing the GNSS measurement via the first measurement gap. The network device may configure the first measurement gap for the GNSS measurement for the terminal based on the capability information. For a process of configuring the first measurement gap for the terminal by the network device based on the capability information, reference may be made to related descriptions in the embodiments of FIG. 4, which is not repeated in embodiments of the disclosure.

In some embodiments, the terminal spontaneously reports the capability information to the network device. In some embodiments, the capability information is reported by the terminal in response to a request from the network device. The network device sends the request information to the terminal, the request information being configured to request the terminal to report the capability information.

In some embodiments, the first indication sent by the terminal to the network device and the capability information reported by the terminal to the network device are carried in a same message. In some embodiments, the first indication sent by the terminal to the network device and the capability information reported by the terminal to the network device are carried in different messages.

In some embodiments, in a case that the terminal requires performing the GNSS measurement and the terminal has not obtained the first measurement gap or the first measurement gap does not satisfy a condition for performing the GNSS measurement by the terminal, the network device receives a third indication sent by the terminal. The third indication indicates that the terminal requires performing the GNSS measurement. The network device may configure for the terminal, based on the third indication, a measurement gap satisfying the GNSS measurement requirement of the terminal.

In some embodiments, in a case that the terminal currently does not require performing the GNSS measurement, the network device may receive a fourth indication sent by the terminal. The fourth indication indicates that the terminal does not require performing the GNSS measurement. The network device may not configure a measurement gap for the GNSS measurement for the terminal based on the fourth indication, thus achieving power saving for the terminal.

### For performing the GNSS measurement outside the first measurement gap:

In some embodiments, the network device may send a second indication to the terminal. The second indication indicates that the terminal is allowed to perform the GNSS measurement outside the first measurement gap. That is, the terminal is capable of performing the GNSS measurement not only within the first measurement gap but also outside the first measurement gap.

### For the GNSS measurement and serving cell measurement:

In some embodiments, the first measurement gap is indicated by the configuration information sent by the network device to the terminal. The configuration information also carries the indication information, the indication information is configured to indicate the terminal to perform the serving cell measurement after the end of the first measurement gap or before the end of the first measurement gap. In some embodiments, the indication information is carried in other messages sent by the network device to the terminal, which is not limited in embodiments of the disclosure.

In some embodiments, the network device sends a configured duration to the terminal. The configured duration is configured to indicate the terminal to perform the serving cell measurement after the end of the first measurement gap or before the end of the first measurement gap in a case that the terminal has not performed the serving cell measurement within the configured duration.

In some embodiments, the network device sends a configured number of times to the terminal. The configured number of times is configured to indicate the terminal to perform the serving cell measurement after the end of the first measurement gap or before the end of the first measurement gap in a case that the terminal has not performed the serving cell measurement within the configured number of times.

In summary, in the method provided in embodiments of the disclosure, by configuring the first measurement gap for the GNSS measurement for the terminal, the terminal is capable of performing the GNSS measurement in the first measurement gap. The first measurement gap may be set based on actual conditions, which may avoid a problem that the terminal cannot perform the GNSS measurement in a case that the GNSS measurement result of the terminal is outdated.

### For a process of configuring the first measurement gap for the terminal:

In some embodiments, before sending the configuration information to the terminal, the network device further needs to receive the capability information reported by the terminal. A process of the network device configuring the first measurement gap for the terminal is introduced in the following embodiments. FIG. 13 is a flow chart illustrating a method for GNSS measurement provided in an embodiment of the disclosure. The method may be applied to a network device. In some embodiments, the method may be applied to the network device in the systems shown in FIG. 1 to FIG. 3. As shown in FIG. 13, based on the embodiments shown in FIG. 12, the method further includes the following step 1204.

At step 1204, capability information reported by the terminal is received.

For an introduction to the capability information, reference may be made to related descriptions in the embodiments of FIG. 4, which are not repeated in embodiments of the disclosure.

In some embodiments, the capability information is reported by the terminal in response to a request from the network device. As shown in FIG. 14, based on the embodiment shown in FIG. 13, the method further includes the following step 1202:

At step 1202: request information is sent to the terminal.

The request information is configured to indicate the terminal to report the capability information to the network device.

In summary, in the method provided in embodiments of the disclosure, by configuring the first measurement gap for the GNSS measurement for the terminal, the terminal is capable of performing the GNSS measurement in the first measurement gap. The first measurement gap may be set based on actual conditions, which may avoid a problem that the terminal cannot perform the GNSS measurement in a case that a GNSS measurement result of the terminal is outdated.

It should be noted that, without conflict, the above embodiments in the disclosure may be combined with other embodiments, steps of other embodiments, or sub-steps of steps in other embodiments. Further, a sequence of steps of the method provided in embodiments of the disclosure may be adjusted appropriately, and the steps may be added or deleted based on actual situations.

For a process of the network device indicating the terminal to perform the GNSS measurement outside the first measurement gap:

FIG. 15 is a flow chart illustrating a method for GNSS measurement provided in an embodiment of the disclosure. The method may be applied to a network device. In some embodiments, the method may be applied to the network device in the systems shown in FIG. 1 to FIG. 3. The method includes the following step 1502.

At step 1502: a second indication is sent to the terminal.

The second indication indicates that the terminal is allowed to perform the GNSS measurement outside the first measurement gap. That is, when the network device indicates that the terminal is capable of performing the GNSS measurement outside the first measurement gap, the terminal may perform the GNSS measurement outside the first measurement gap based on the aforementioned condition.

For a specific implementation process of the terminal performing the GNSS measurement outside the first measurement gap, reference may be made to the embodiments of FIG. 4, which is not repeated in embodiments of the disclosure.

In summary, in the method provided in the embodiment, the terminal performs the GNSS measurement outside the first measurement gap, thus avoiding inaccurate positioning caused by the terminal being unable to perform the GNSS measurement when a GNSS measurement result of the terminal is outdated.

It should be noted that steps in the above embodiment may be combined with other embodiments. For example, the step 1502 may be combined with all steps, part of steps, or optional implementations provided in the embodiments shown in FIG. 12, FIG. 13, and FIG. 14 to obtain a new embodiment.

The following shows a method for GNSS measurement provided in an embodiment of the disclosure:

In an optional implementation, a network (network device) sends GNSS measurement gap configuration information to a UE. The UE uses a configured measurement gap to perform GNSS measurement.

In an optional implementation, the measurement gap configuration information includes at least one of: a starting SFN and a subframe, a repetition period, an offset, a gap length, a TA of the gap, a gap type (e.g., per UE gap or per FR1 gap), a gap ID, a gap priority, information indicating whether the gap is used for the GNSS measurement, or a gap sharing strategy.

In an example, the gap type, the gap ID, and the information indicating whether the gap is used for the GNSS measurement may be explicitly or implicitly indicated. For example, if the gap type is not indicated, the gap type is defaulted to be the per UE. The gap ID does not need to be indicated.

In an optional implementation, the gap sharing strategy includes an indication of proportions for intra frequency cell measurement or inter frequency cell measurement and for the GNSS measurement within the measurement gap.

For example, the intra frequency cell measurement or the inter frequency cell measurement occupies 30% of the measurement gap and the GNSS measurement occupies 70% of the measurement gap, then a delay of the intra frequency cell measurement or the inter frequency cell measurement needs to be divided by 30% on the basis of a base delay, and a delay of the GNSS measurement needs to be divided by 70% on the basis of the base delay.

In an optional implementation, the GNSS measurement gap may be configured as a measurement gap dedicated to the GNSS measurement, or may be configured to multiplex another measurement gap.

In an optional implementation, the GNSS measurement gap may multiplex another measurement gap.

In an optional implementation, no dedicated GNSS measurement gap is configured, then configuration of a measurement gap configuration (MeasGapConfig) is used. The measurement gap configuration is an existing measurement gap configuration parameter (for cell measurement).

In an optional implementation, the UE may indicate to the network whether a dedicated GNSS measurement gap (legacy measurement gap) is required for performing the GNSS measurement.

In an optional implementation, the network allows configuration of the GNSS measurement gap multiplexing another measurement gap configured when no concurrent measurement gap is configured.

In an optional implementation, the UE reports its own capability information to the network, indicating whether a measurement gap is required for the GNSS measurement.

In an optional implementation, the network may request the UE to report its capability of requiring a measurement gap for the GNSS measurement. After receiving the request, the UE reports whether it has the capability of requiring the measurement gap for the GNSS measurement.

In an optional implementation, the UE reports capability information to the network, indicating whether the UE supports performing the GNSS measurement via the measurement gap.

In an optional implementation, no measurement gap is available for the GNSS measurement before GNSS is expired/outdated, then the UE may obtain the GNSS by performing the GNSS measurement outside the measurement gap.

In an optional implementation, the network sends the configuration information indicating whether the UE is allowed to perform the GNSS measurement outside the measurement gap.

In an optional implementation, the GNSS measurement gap and another measurement gap may be configured simultaneously. The GNSS measurement gap and another measurement gap overlap/intersect in time, then the UE determines whether to adopt the GNSS measurement gap or another measurement gap during an overlapping time based on priority.

For example, another measurement gap may be a measurement gap configuration (MeasGapConfig) configured for per terminal, or a measurement gap configuration per carrier (MeasGapConfigPerCC) configured for per carrier, or a dense PRS measurement gap configuration (MeasGapConfigDensePRS) configured for dense PRS measurement. The priority of the GNSS measurement gap may adopt a network configuration manner, or the system may agree that a priority of the GNSS measurement gap is higher or lower than priorities of other measurement gaps. For example, the system may agree that the priority of the GNSS measurement gap is higher or lower than a priority of a measurement gap for the intra frequency cell measurement or the inter frequency cell measurement; or agree that the priority of the GNSS measurement gap is higher or lower than a priority of a measurement gap for the PRS measurement.

In an optional implementation, GNSS of the UE is outdated, then the UE may perform the GNSS measurement outside the measurement gap.

In an optional implementation, the UE currently requires performing the GNSS measurement but the network has not configured a measurement gap for the GNSS measurement or the configured measurement gap is insufficient for the GNSS measurement, then the UE sends to the network indication information indicating that the GNSS measurement is required.

In an optional implementation, the UE currently does not require performing the GNSS measurement, then the UE sends to the network indication information indicating that the GNSS measurement is not required.

In an optional implementation, the UE performs the serving cell measurement after an end of the GNSS measurement gap or before the end of the GNSS measurement gap.

In an optional implementation, the network indicates in configuration of the measurement gap whether the UE needs to perform the serving cell measurement after the end of the GNSS measurement gap or before the end of the GNSS measurement gap.

In an optional implementation, the UE has not performed the serving cell measurement within a time period, then the UE performs the serving cell measurement after the end of the GNSS measurement gap or before the end of the GNSS measurement gap. The time period is configured by a base station or agreed in the system.

In an optional implementation, the UE has not performed the serving cell measurement for N consecutive times, then the UE performs the serving cell measurement after the end of the GNSS measurement gap or before the end of the GNSS measurement gap. N is configured by the base station or agreed in the system.

It should be noted that, without conflict, the above embodiments in the disclosure may be combined with other embodiments, steps of other embodiments, or sub-steps of steps in other embodiments. Further, a sequence of steps of the method provided in embodiments of the disclosure may be adjusted appropriately, and the steps may be added or deleted based on actual situations. Changes and substitutions that may be easily considered by those skilled in the art within a technical scope disclosed in the disclosure shall be regarded as within the scope of protection of the disclosure, which are not repeated here.

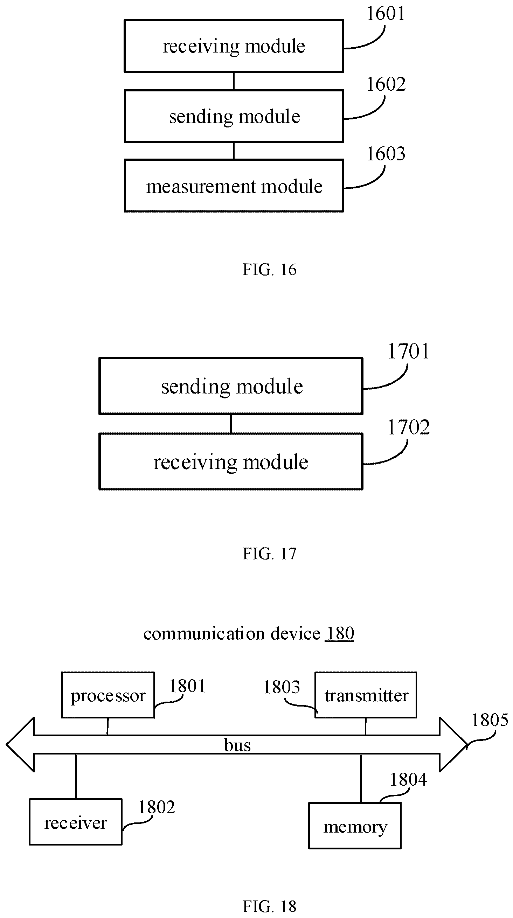

FIG. 16 is a structural block diagram illustrating an apparatus for GNSS measurement provided in an embodiment of the disclosure. As shown in FIG. 16, the apparatus includes a receiving module 1601.

The receiving module 1601 is configured to receive configuration information, in which the configuration information is used to configure a first measurement gap, the first measurement gap is used for the GNSS measurement.

In an optional implementation, the configuration information includes at least one of: a SFN and a subframe; a repetition period; an offset; a gap length; a TA of the gap; a gap type; a gap identity; a gap priority; information indicating that the gap is used for the GNSS measurement; or a gap sharing strategy.

In an optional implementation, the gap sharing strategy indicates a proportion of the first measurement gap and a cell measurement gap within a gap used for measurement; and the cell measurement gap is used for the terminal to perform cell measurement.

In an optional implementation, the first measurement gap is dedicated to the GNSS measurement, or, the first measurement gap multiplexes a second measurement gap; and the second measurement gap is configured for measurement other than the GNSS measurement.

In an optional implementation, the apparatus further includes the sending module 1602, configured to send a first indication to a network device, in which the first indication indicates that the terminal requires the first measurement gap dedicated to the GNSS measurement.

In an optional implementation, in a case that the second measurement gap is not configured with a concurrent measurement gap, the first measurement gap multiplexes the second measurement gap; and the concurrent measurement gap is configured for measurement other than the GNSS measurement performed concurrently with the second measurement gap.

In an optional implementation, the apparatus further includes the sending module 1602, configured to report capability information to a network device, in which the capability information includes at least one of: information indicating that the terminal requires performing the GNSS measurement via the first measurement gap, or information indicating that the terminal supports performing the GNSS measurement via the first measurement gap.

In an optional implementation, the receiving module 1601 is configured to receive request information sent by the network device, in which the request information is configured to request the terminal to report the capability information.

In an optional implementation, the apparatus further includes a measurement module 1603, configured to, in a case that the first measurement gap is after an outdated time point, or, in a case that a GNSS measurement result of the terminal is outdated, perform the GNSS measurement outside the first measurement gap; in which the outdated time point is a time point when the GNSS measurement result of the terminal is outdated.

In an optional implementation, the receiving module 1601 is configured to receive a second indication sent by a network device; in which the second indication indicates that the terminal is allowed to perform the GNSS measurement outside the first measurement gap.

In an optional implementation, the apparatus further includes the measurement module 1603, configured to, in a case that an overlap between the first measurement gap and a second measurement gap is present, determine, based on a gap priority, to perform measurement corresponding to the first measurement gap within the overlap, or to perform measurement corresponding to the second measurement gap within the overlap; in which the second measurement gap is configured for measurement other than the GNSS measurement.

In an optional implementation, the apparatus further includes the sending module 1602, configured to, in a case that the terminal requires performing the GNSS measurement and the terminal has not obtained the first measurement gap, or the first measurement gap does not satisfy a condition of performing the GNSS measurement by the terminal, send a third indication to a network device; in which the third indication indicates that the terminal requires performing the GNSS measurement.

In an optional implementation, the apparatus further includes the sending module 1602, configured to, in a case that the terminal currently does not require performing the GNSS measurement, send a fourth indication to a network device; in which the fourth indication indicates that the terminal does not require performing the GNSS measurement.

In an optional implementation, the apparatus further includes the measurement module 1603, configured to perform serving cell measurement after an end of the first measurement gap or before the end of the first measurement gap.

In an optional implementation, the measurement module 1603 is configured to perform the serving cell measurement after the end of the first measurement gap or before the end of the first measurement gap based on an indication of indication information; or, in a case that the terminal has not performed the serving cell measurement within a configured duration, perform the serving cell measurement after the end of the first measurement gap or before the end of the first measurement gap; or, in a case that the terminal has not performed the serving cell measurement within a configured number of times, perform the serving cell measurement after the end of the first measurement gap or before the end of the first measurement gap; in which the configured duration is configured by a network device or predefined, and the configured number of times is configured by the network device or predefined.

FIG. 17 is a structural block diagram illustrating an apparatus for GNSS measurement provided in an embodiment of the disclosure. As shown in FIG. 17, the apparatus includes a sending module 1701.

The sending module 1701 is configured to send configuration information to a terminal, in which the configuration information is used to configure a first measurement gap, the first measurement gap is used for the GNSS measurement.

In an optional implementation, the configuration information includes at least one of: a SFN and a subframe; a repetition period; an offset; a gap length; a TA of the gap; a gap type; a gap identity; a gap priority; information indicating that the gap is used for the GNSS measurement; or a gap sharing strategy.

In an optional implementation, the first measurement gap is dedicated to the GNSS measurement, or, the first measurement gap multiplexes a second measurement gap; and the second measurement gap is configured for measurement other than the GNSS measurement.

In an optional implementation, the apparatus further includes the receiving module 1702, configured to receive a first indication sent by the terminal; in which the first indication indicates that the terminal requires the first measurement gap dedicated to the GNSS measurement.

In an optional implementation, in a case that the second measurement gap is not configured with a concurrent measurement gap, the first measurement gap multiplexes the second measurement gap; and the concurrent measurement gap is configured for measurement other than the GNSS measurement performed concurrently with the second measurement gap.

In an optional implementation, the apparatus further includes a receiving module 1702, configured to receive capability information reported by the terminal; in which the capability information includes at least one of: information indicating that the terminal requires performing the GNSS measurement via the first measurement gap, or information indicating that the terminal supports performing the GNSS measurement via the first measurement gap.

In an optional implementation, the sending module 1701 is configured to send request information to the terminal; in which the request information is configured to request the terminal to report the capability information.

In an optional implementation, the sending module 1701 is configured to send a second indication to the terminal; in which the second indication indicates that the terminal is allowed to perform the GNSS measurement outside the first measurement gap.

In an optional implementation, the apparatus further includes the receiving module 1702, configured to receive a third indication sent by the terminal, in which the third indication indicates that the terminal requires performing the GNSS measurement, and the third indication is sent in a case that the terminal requires performing the GNSS measurement and the terminal has not obtained the first measurement gap, or the first measurement gap does not satisfy a condition of performing the GNSS measurement by the terminal.

In an optional implementation, In an optional implementation, the apparatus further includes the receiving module 1702, configured to receive a fourth indication sent by the terminal, in which the fourth indication indicates that the terminal does not require performing the GNSS measurement, and the fourth indication is sent in a case that the terminal currently does not require performing the GNSS measurement.

One point to be noted is that when implementing the functions by the apparatus in the above embodiments, a division of functional modules is merely for an illustrative purpose. In an actual disclosure, based on actual needs, the above functions may be assigned to be completed by different functional modules, that is, a content structure of the device may be divided into different functional modules to achieve all or part of the functions described above.

As for the apparatus in the above embodiments, specific implementations in which each module performs an operation has been described in detail in the method embodiments and will not be repeated here.

FIG. 18 is a schematic structural diagram illustrating a communication device provided in an embodiment of the disclosure. The communication device 180 may include: a processor 1801, a receiver 1802, a transmitter 1803, a memory 1804 and a bus 1805.

The processor 1801 includes one or more processing cores. The processor 1801 executes software programs and modules to perform various functional disclosures and information processing.

The receiver 1802 and the transmitter 1803 may be implemented as a communication component, which may be a communication chip.

The memory 1804 is connected to the processor 1801 via the bus 1805.

The memory 1804 may be configured to store at least one instruction. The processor 1801 is configured to execute the at least one instruction to implement various steps in the above method embodiments.

In addition, the memory 1804 may be implemented by any type of volatile or nonvolatile memory devices or a combination thereof. The volatile or nonvolatile memory device includes, but not limited to: a random access memory (RAM) and read-only memory (ROM), an electrically erasable programmable read-only memory (EEPROM), an erasable programmable read-only memory (EPROM), a flash memory or other solid storage technologies, a compact disc read-only memory (CD-ROM), a digital video disc (DVD) or other optical storages, a tape cartridge, a tape, a disk storage or other magnetic storage devices.

When the communication device is implemented as a terminal, the processor and the transceiver in the communication device in embodiments of the disclosure may be implemented together as a communication chip, or the transceiver may form a communication chip separately. The transmitter in the transceiver performs sending steps executed by the terminal in any of the above methods, a receiver in the transceiver performs receiving steps executed by the terminal in any of the above methods, and the processor performs steps other than the sending steps and the receiving steps, which are not repeated here.

When the communication device is implemented as a network device, the processor and the transceiver in the communication device in embodiments of the disclosure may be implemented together as a communication chip, or the transceiver may form a communication chip separately. The transmitter in the transceiver performs sending steps executed by the network device in any of the above methods, a receiver in the transceiver performs receiving steps executed by the network device in any of the above methods, and the processor performs steps other than the sending steps and the receiving steps, which are not repeated here.

In an embodiment, a computer-readable storage medium is also provided. The computer-readable storage medium stores at least one instruction, at least one program, a code set, or an instruction set. The at least one instruction, the at least one program, the code set, or the instruction set is loaded and executed by a processor to implement the method for GNSS measurement provided in each of the method embodiments described above.

In an embodiment, a chip is also provided. The chip includes programmable logic circuits and/or program instructions. When the chip is running on the communication device, the method for GNSS measurement provided in each of the method embodiments described above is implemented.

In an embodiment, a computer program product is also provided. When the computer program product runs on a processor of a computer device, the computer program product causes the computer device to execute the method for GNSS measurement described above.

Those skilled in the art may realize that in one or more of the above examples, the functions described in the disclosure may be performed using hardware, software, firmware, or any combination thereof. When performed using the software, the functions may be stored on a computer-readable medium or transmitted as one or more instructions or codes on a computer-readable medium. The computer-readable medium includes a computer storage medium and a communication medium, in which the communication medium includes any medium capable of facilitating transmission of the computer program from one place to another. The storage medium may be any available medium that a general or specialized computer may access.

The above description is only the example embodiments of the disclosure, which is not used to limit the disclosure. Any modification, equivalent replacement, improvement and the like made within the spirit and principle of the disclosure shall be regarded as within the scope of protection of the disclosure.

## Claims

1. A method for global navigation satellite system (GNSS) measurement, performed by a terminal, comprising:
receiving configuration information, wherein the configuration information is used to configure a first measurement gap, the first measurement gap being used for the GNSS measurement.

2. The method according to claim 1, wherein the configuration information comprises at least one of:
a starting system frame number (SFN) and a subframe;
a repetition period;
an offset;
a gap length;
a timing advance (TA) of the gap;
a gap type;
a gap identity;
a gap priority;
information indicating that the gap is used for the GNSS measurement; or
a gap sharing strategy.

3. The method according to claim 2, wherein the gap sharing strategy indicates a proportion of the first measurement gap and a cell measurement gap within a gap used for measurement; and
the cell measurement gap is used for the terminal to perform cell measurement.

4. The method according to any one of claims 1 to 3, wherein the first measurement gap is dedicated to the GNSS measurement, or, the first measurement gap multiplexes a second measurement gap; and
the second measurement gap is configured for measurement other than the GNSS measurement.

5. The method according to claim 4, further comprising:
sending a first indication to a network device;
wherein the first indication indicates that the terminal requires the first measurement gap dedicated to the GNSS measurement.

6. The method according to claim 4, wherein
in a case that the second measurement gap is not configured with a concurrent measurement gap, the first measurement gap multiplexes the second measurement gap; and
the concurrent measurement gap is configured for measurement other than the GNSS measurement performed concurrently with the second measurement gap.

7. The method according to any one of claims 1 to 6, further comprising:
reporting capability information to a network device;
wherein the capability information comprises at least one of: information indicating that the terminal requires performing the GNSS measurement via the first measurement gap, or information indicating that the terminal supports performing the GNSS measurement via the first measurement gap.

8. The method according to claim 7, further comprising:
receiving request information sent by the network device;
wherein the request information is configured to request the terminal to report the capability information.

9. The method according to any one of claims 1 to 8, further comprising:
in a case that the first measurement gap is after an outdated time point, or, in a case that a GNSS measurement result of the terminal is outdated, performing the GNSS measurement outside the first measurement gap;
wherein the outdated time point is a time point when the GNSS measurement result of the terminal is outdated.

10. The method according to claim 9, further comprising:
receiving a second indication sent by a network device;
wherein the second indication indicates that the terminal is allowed to perform the GNSS measurement outside the first measurement gap.

11. The method according to any one of claims 1 to 10, further comprising:
in a case that an overlap between the first measurement gap and a second measurement gap is present, determining, based on a gap priority, to perform measurement corresponding to the first measurement gap within the overlap, or to perform measurement corresponding to the second measurement gap within the overlap;
wherein the second measurement gap is configured for measurement other than the GNSS measurement.

12. The method according to any one of claims 1 to 11, further comprising:
in a case that the terminal requires performing the GNSS measurement and the terminal has not obtained the first measurement gap, or the first measurement gap does not satisfy a condition of performing the GNSS measurement by the terminal, sending a third indication to a network device;
wherein the third indication indicates that the terminal requires performing the GNSS measurement.

13. The method according to any one of claims 1 to 12, further comprising:
in a case that the terminal currently does not require performing the GNSS measurement, sending a fourth indication to a network device;
wherein the fourth indication indicates that the terminal does not require performing the GNSS measurement.

14. The method according to any one of claims 1 to 13, further comprising:
performing serving cell measurement after an end of the first measurement gap or before the end of the first measurement gap.

15. The method according to claim 14, wherein performing the serving cell measurement after the end of the first measurement gap or before the end of the first measurement gap comprises:
performing the serving cell measurement after the end of the first measurement gap or before the end of the first measurement gap based on an indication of indication information; or,
in a case that the terminal has not performed the serving cell measurement within a configured duration, performing the serving cell measurement after the end of the first measurement gap or before the end of the first measurement gap; or,
in a case that the terminal has not performed the serving cell measurement within a configured number of times, performing the serving cell measurement after the end of the first measurement gap or before the end of the first measurement gap;
wherein the configured duration is configured by a network device or predefined, the configured number of times is configured by the network device or predefined.

16. A method for global navigation satellite system (GNSS) measurement, performed by a network device, comprising:
sending configuration information to a terminal, wherein the configuration information is used to configure a first measurement gap, the first measurement gap being used for the GNSS measurement.

17. The method according to claim 16, wherein the configuration information comprises at least one of:
a starting system frame number (SFN) and a subframe;
a repetition period;
an offset;
a gap length;
a timing advance (TA) of the gap;
a gap type;
a gap identity;
a gap priority;
information indicating that the gap is used for the GNSS measurement; or
a gap sharing strategy.

18. The method according to claim 16 or 17, wherein the first measurement gap is dedicated to the GNSS measurement, or, the first measurement gap multiplexes a second measurement gap; and
the second measurement gap is configured for measurement other than the GNSS measurement.

19. The method according to claim 18, further comprising:
receiving a first indication sent by the terminal;
wherein the first indication indicates that the terminal requires the first measurement gap dedicated to the GNSS measurement.

20. The method according to any one of claims 16 to 19, further comprising:
receiving capability information reported by the terminal;
wherein the capability information comprises at least one of: information indicating that the terminal requires performing the GNSS measurement via the first measurement gap, or information indicating that the terminal supports performing the GNSS measurement via the first measurement gap.

21. The method according to claim 20, further comprising:
sending request information to the terminal;
wherein the request information is configured to request the terminal to report the capability information.

22. The method according to any one of claims 16 to 21, further comprising:
sending a second indication to the terminal;
wherein the second indication indicates that the terminal is allowed to perform the GNSS measurement outside the first measurement gap.

23. An apparatus for global navigation satellite system (GNSS) measurement, comprising:
a receiving module, configured to receive configuration information, wherein the configuration information is used to configure a first measurement gap, the first measurement gap being used for the GNSS measurement.

24. An apparatus for global navigation satellite system (GNSS) measurement, comprising:
a sending module, configured to send configuration information to a terminal, wherein the configuration information is used to configure a first measurement gap, the first measurement gap being used for the GNSS measurement.

25. A terminal, comprising:
a processor;
a transceiver connected to the processor; and
a memory storing executable instructions for the processor;
wherein the processor is configured to load and execute the executable instructions to perform the method for GNSS measurement according to any one of claims 1 to 15.

26. A network device, comprising:
a processor;
a transceiver connected to the processor; and
a memory storing executable instructions for the processor;
wherein the processor is configured to load and execute the executable instructions to perform the method for GNSS measurement according to any one of claims 16 to 22.

27. A computer-readable storage medium, storing executable instructions, which are loaded and executed by a processor to implement the method for GNSS measurement according to any one of claims 1 to 22.
